# FASCICULE DE BREVET EUROPEEN

(11) **EP 3 487 126 B1**
(45) Date de publication et mention de la délivrance du brevet: **03.03.2021**
(21) Numéro de dépôt: 18207438.5
(22) Date de dépôt: 21.11.2018
(51) Int. Cl.: H04L 12/46, H04L 12/40

(54) **PROCÉDÉ D'ÉMISSION D'UN MESSAGE DE DONNÉES À DESTINATION D'UN DISPOSITIF ÉLECTRONIQUE RÉCEPTEUR, DISPOSITIF ÉLECTRONIQUE ÉMETTEUR ET PROGRAMME D'ORDINATEUR ASSOCIÉS**
VERFAHREN ZUR ÜBERTRAGUNG EINER DATENNACHRICHT AN EINE ELEKTRONISCHE VORRICHTUNG, ELEKTRONISCHE VORRICHTUNG UND COMPUTERPROGRAMM
METHOD FOR TRANSMITTING A DATA MESSAGE TO AN ELECTRONIC RECEIVING DEVICE, RELATED ELECTRONIC TRANSMITTING DEVICE AND COMPUTER PROGRAM

(30) Priorité: 21.11.2017 FR 1701211
(43) Date de publication de la demande: 22.05.2019
(73) Titulaire: THALES, 92400 Courbevoie (FR)
(72) Inventeur: ROULON, Stéphane, 33700 MERIGNAC (FR); BILLAULT, Ludovic, 33700 MERIGNAC (FR); TODESCATO, Isabelle, 33700 MERIGNAC (FR); VENGEON, Jean-Jérôme, 33700 MERIGNAC (FR)
(74) Mandataire: Lavoix

(56) Documents cités:
- US-A1- 2005 190 760
- US-A1- 2016 182 687
- US-A1- 2016 249 254

## Description

La présente invention concerne un procédé d'émission d'un message de données à destination d'au moins un dispositif électronique récepteur, le procédé étant mis en oeuvre par un dispositif électronique émetteur, le dispositif émetteur et le ou les dispositifs récepteurs étant reliés via un réseau avionique embarqué à bord d'un aéronef, au moins un dispositif parmi le dispositif émetteur et le dispositif récepteur étant un dispositif avionique embarqué à bord de l'aéronef.

Le procédé d'émission comprend la génération d'un message de données, le message comprenant un en-tête de message et un ou plusieurs paquets de données, et l'émission du message généré à destination du dispositif récepteur.

La présente invention concerne aussi un programme d'ordinateur comportant des instructions logicielles qui, lorsqu'elles sont exécutées par un ordinateur, mettent en oeuvre un tel procédé d'émission.

La présente invention concerne également un dispositif électronique émetteur configuré pour émettre un message de données à destination d'un ou plusieurs dispositifs électronique récepteur, le dispositif émetteur et le ou les dispositifs récepteurs étant aptes à être reliés via un réseau avionique embarqué à bord d'un aéronef, au moins un dispositif parmi le dispositif émetteur et le dispositif récepteur étant un dispositif avionique destiné à être embarqué à bord de l'aéronef.

La présente invention concerne le domaine de la communication de données et de l'interfaçage fonctionnel à travers un réseau avionique entre deux dispositifs électroniques, au moins un dispositif étant destiné à être embarqué à bord d'un aéronef. Un dispositif électronique est par exemple un serveur fonctionnel, configuré pour mettre en œuvre une fonction, telle qu'une fonction avionique, tel qu'un système de gestion de vol ou FMS (de l'anglais *Flight Management System*), un système de gestion de radio ou RMS (de l'anglais *Radio Management System*), un système d'alerte terrain ou TAWS (de l'anglais *Terrain Awareness and Warning System*), un système radar de météorologie, un récepteur AIS (de l'anglais *Avionics Interface Systems*), ou encore un système de préparation de mission, et l'autre dispositif électronique est par exemple un système d'affichage, tel qu'un système d'affichage dans le cockpit ou CDS (de l'anglais *Cockpit Display System*) ou un dispositif d'affichage tête haute ou HUD (de l'anglais *Head-Up Display*), ou un cartable de vol électronique ou EFB (de l'anglais *Electronic Flight Bag*), ou encore un autre serveur fonctionnel, l'autre dispositif étant alors un serveur mettant en oeuvre une autre fonction. L'invention concerne alors par exemple un échange de données entre un système de gestion de vol ou FMS et un système de gestion de radio ou RMS.

US 2016/0249254 A1 décrit un procédé d'émission d'un message de données à destination d'au moins un dispositif électronique récepteur.

Les réseaux de communication les plus utilisés pour interfacer les systèmes des aéronefs actuels sont des réseaux de communication conformes au protocole ARINC 429 qui offre une faible bande passante, avec un débit jusqu'à 100 kbit/s, et des réseaux de communication conformes à la partie 7 du protocole ARINC 664 qui sont des réseaux commutés avec un débit jusqu'à 100 Mbit/s.

On connait également des réseaux de communication conformes au protocole ARINC 661 ou au protocole ARINC 739. Ces protocoles ARINC 661 et ARINC 739 permettent de supporter l'interface entre un système avionique fonctionnel et un système d'affichage. Avec le protocole ARINC 661, les échanges se font sur des objets graphiques qui sont hébergés dans le système d'affichage et pilotés par le système avionique fonctionnel. Le protocole ARINC 661 permet de limiter significativement le volume de données échangées car seules les données requises à un instant donné sont fournies par le système avionique fonctionnel. Avec le protocole ARINC 739, les informations échangées sont des appuis clavier et des caractères à afficher.

Toutefois, ces protocoles ne sont pas adaptés pour gérer efficacement des échanges de données, en particulier des échanges fonctionnels, entre tous les systèmes avioniques dont au moins un est embarqué à bord de l'aéronef, ces échanges se caractérisant principalement par un nombre important de données différentes et de nombreuses occurrences.

Le but de l'invention est alors de proposer un procédé d'émission et un dispositif électronique émetteur associé, qui permettent de s'adapter plus facilement aux différents types de données à échanger à bord de l'aéronef.

A cet effet, l'invention a pour objet un procédé d'émission d'un message de données, selon la revendication 1.

Avec le procédé d'émission selon l'invention, la structuration des messages émis en agrégats de données, chaque agrégat contenant un champ d'identifiant, un champ de taille et un champ de données utiles, et chaque agrégat étant adapté pour inclure un ou plusieurs autres agrégats de données, le ou les autres agrégats de données formant alors le champ de données utiles dudit agrégat, permet une évolutivité de la transmission des données. Le procédé d'émission selon l'invention permet également de limiter la bande passante utilisée en émettant les seuls agrégats nécessaires. Chaque agrégat de données correspond à une information fonctionnelle, et la structuration de l'information est déterminée par le dispositif émetteur.

Suivant d'autres aspects avantageux de l'invention, le procédé d'émission est selon l'une quelconque des revendications 2 à 7.

L'invention a également pour objet un programme d'ordinateur selon la revendication 8.

L'invention a également pour objet un dispositif électronique émetteur selon la revendication 9.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système de communication comprenant au moins deux équipements électroniques reliés entre eux par un réseau avionique de communication, au moins l'un des équipements électroniques comportant un dispositif électronique émetteur selon l'invention ;
- la figure 2 est un organigramme d'une transmission de données au sein du système de communication de la figure 1, avec la mise en oeuvre d'un procédé d'émission d'un message de données selon l'invention, puis d'un procédé de réception du message émis ; et
- la figure 3 est une vue schématique représentant la structure d'un message de de données émis par le dispositif électronique émetteur selon l'invention.

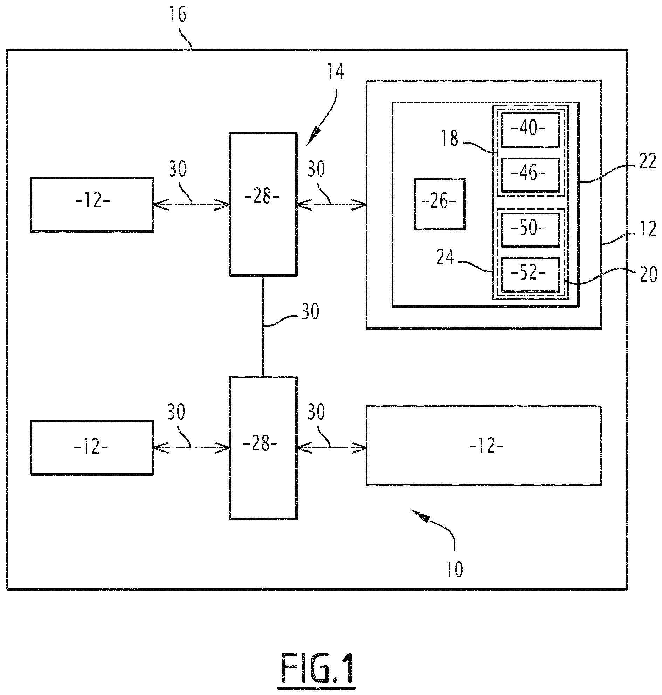

Sur la figure 1, un système de communication 10 comporte au moins deux équipements électroniques 12 reliés entre eux par un réseau avionique de communication 14, tel qu'un réseau de communication Ethernet. Au moins l'un des équipements électroniques 12 et le réseau avionique de communication 14 sont embarqués à bord d'un aéronef 16. L'aéronef 16 est de préférence un avion. En variante, l'aéronef 16 est un hélicoptère, ou encore un drone piloté à distance par un pilote.

Le système de communication 10 comporte plusieurs équipements électroniques 12, tels que des équipements avioniques comme dans l'exemple de la figure 1 où le système de communication 10 est embarqué à bord de l'aéronef 16.

Le système de communication 10 comprend un dispositif électronique émetteur 18 et au moins un dispositif électronique récepteur 20 reliés entre eux par le réseau avionique de communication 14. Au moins un dispositif parmi le dispositif émetteur 18 et le ou les dispositifs récepteurs 20 est un dispositif avionique embarqué à bord de l'aéronef 16.

En variante, non représentée, au moins un dispositif parmi le dispositif émetteur 18 et le ou les dispositifs récepteurs 20 est un dispositif électronique externe à un domaine de communication sécurisé au sein de l'aéronef 16, ce dispositif étant par exemple un dispositif externe à l'aéronef 16, tel qu'un dispositif électronique installé au sol. Ce dispositif électronique externe est alors relié à chaque autre dispositif du système de communication 10 via une passerelle de communication, non représentée, embarquée à bord de l'aéronef 16 et connectée au réseau avionique de communication 14. Le domaine externe à ce domaine de communication sécurisé est également appelé monde ouvert. Le dispositif électronique externe appartient alors au monde ouvert, et la passerelle de communication qui est une passerelle sécurisée, en incluant notamment un pare-feu informatique (de l'anglais *firewall*), assure l'interface entre le domaine sécurisé et le monde ouvert.

Dans l'exemple de la figure 1, chaque équipement électronique 12 est de préférence configuré, d'une part, pour émettre des données à destination d'autre(s) équipement(s) électronique(s) 12, et d'autre part, pour recevoir des données de la part d'autre(s) équipement(s) électronique(s) 12. Chaque équipement électronique 12 comprend alors de préférence le dispositif émetteur 18 et le dispositif récepteur 20.

L'homme du métier comprendra bien entendu qu'un équipement électronique 12 qui ne serait destiné qu'à émettre des données et pas à en recevoir, comportera alors le dispositif émetteur 18, mais pas le dispositif récepteur. Inversement, un équipement électronique 12 qui ne serait destiné qu'à recevoir des données de la part d'autre(s) équipement(s) électronique(s) 12 comportera alors le dispositif récepteur 20, mais pas le dispositif émetteur.

Dans l'exemple de la figure 1, chaque équipement électronique 12 comprend une unité de traitement d'informations 22 formée par exemple d'une mémoire 24 associée à un processeur 26.

Dans l'exemple de la figure 1, un seul équipement électronique 12 est représenté en détail avec les différents dispositifs et modules qu'il contient, par souci de simplification du dessin.

Le réseau avionique de communication 14 comprend au moins un commutateur réseau 28 et au moins une liaison bidirectionnelle 30, chaque commutateur réseau 28 étant connecté à un ou plusieurs équipements électroniques 12 via des liaisons bidirectionnelles 30 respectives. Le réseau de communication avionique 14 comprend de préférence plusieurs commutateurs réseau 28, comme dans l'exemple de la figure 1 où le réseau avionique de communication 14 comprend deux commutateurs réseau 28 reliés entre eux par une liaison bidirectionnelle 30.

L'homme du métier comprendra que, lorsque le réseau avionique de communication 14 est un réseau de communication Ethernet, chaque commutateur réseau 28 est un commutateur réseau Ethernet, et chaque liaison bidirectionnelle 30 est une liaison bidirectionnelle Ethernet.

En complément facultatif, le réseau avionique de communication 14 est un réseau de communication redondant et comporte au moins deux réseaux élémentaires indépendants, redondants l'un de l'autre. Dans ce cas, deux équipements électroniques 12, un équipement source et un équipement destinataire, communiquent par l'intermédiaire d'au moins deux réseaux élémentaires indépendants. De façon connue, la redondance est réalisée trame par trame sur chacun desdits réseaux.

Chaque dispositif électronique émetteur 18 est configuré pour émettre, à destination du ou des dispositifs électroniques récepteurs 20, au moins un message 35 de données.

Chaque dispositif émetteur 18 comprend un module de génération 40 configuré pour générer un message de données 35 respectif, le message 35 comprenant un en-tête de message 42 et un ou plusieurs paquets 44 de données. Chaque dispositif émetteur 18 comprend un module d'émission 46 configuré pour émettre le message généré 35 à destination du ou des dispositifs récepteurs 20.

Chaque dispositif électronique récepteur 20 est configuré pour recevoir des données, en particulier des messages de données 35, via le réseau de communication 14. Chaque dispositif récepteur 20 comprend un module de réception 50 configuré pour recevoir via le réseau de communication 14 au moins un message de données 35 et un module de traitement 52 configuré pour traiter chaque message reçu 35.

Dans l'exemple de la figure 1, le module de génération 40, le module d'émission 46, le module de réception 50 et le module de traitement 52 sont réalisés chacun sous forme d'un logiciel exécutable par le processeur 26. La mémoire 24 est alors apte à stocker un logiciel de génération configuré pour générer un message de données 35 respectif, un logiciel d'émission configuré pour émettre le message généré 35 à destination du ou des dispositifs récepteurs 20. La mémoire 24 est également apte à stocker un logiciel de réception configuré pour recevoir via le réseau de communication 14 au moins un message de données 35 et un logiciel de traitement configuré pour traiter chaque message reçu 35. Le processeur 26 de l'unité de traitement d'informations 22 est alors apte à exécuter le logiciel de génération et le logiciel d'émission dans le cas du dispositif émetteur 18, ou bien à exécuter le logiciel de réception et le logiciel de traitement dans le cas du dispositif récepteur 20.

En variante non représentée, le module de génération 40, le module d'émission 46, le module de réception 50 et le module de traitement 52 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Un message de données 35, ou encore une trame de données, est défini comme un ensemble de données envoyé en une seule fois sur le réseau de communication 14, depuis un dispositif émetteur 18 vers un ou plusieurs dispositifs récepteurs 20.

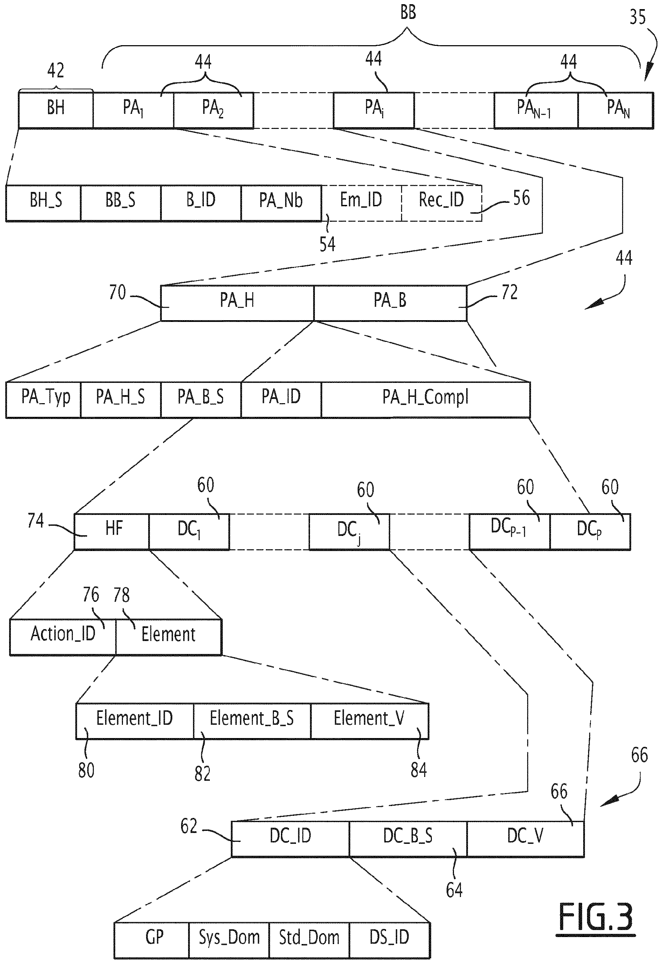

Chaque message 35 comprend un en-tête de message 42 respectif, également noté BH (de l'anglais *Batch Header*), et un ou plusieurs paquets 44 de données, chaque paquet 44 étant également noté PA (du français *PAquet* ou de l'anglais *PAcket*), comme représenté sur la figure 3. Sur la figure 3, à chaque paquet 44 est associé un indice i, de valeur comprise entre 1 et N, où N est un nombre entier supérieur ou égal à 1 représentant le nombre de paquets 44 formant le message 35. L'ensemble de N paquet(s) 44, également appelé lot de paquet(s) 44, forme le corps du message 35 et est noté BB (de l'anglais *Batch Body*).

L'en-tête de message 42 comporte un champ de taille de l'en-tête, noté BH_S (de l'anglais *Batch Header Size*), contenant la taille de l'en-tête de message 42, exprimée par exemple en bits ou en octets. Ce champ de taille BH_S permet de gérer une évolutivité et une variabilité du contenu de l'en-tête 42.

L'en-tête de message 42 comporte un champ de taille du corps, noté BB S (de l'anglais *Batch Body Size*), contenant la taille du corps de message BB, exprimée par exemple en octets. Chaque corps de message BB est de préférence constitué de l'ensemble de N paquet(s) 44.

L'en-tête de message 42 inclut aussi un champ d'identification du message, noté B_ID (de l'anglais *Batch IDentifier*), contenant un identifiant du message 35. Cet identifiant est par exemple implémenté sous forme d'un compteur entier sur un nombre prédéfini de bits, le compteur étant incrémenté d'une unité à chaque émission. Le nombre de bits est par exemple égal à 32, ce qui permet alors d'avoir un identifiant unique pour l'ensemble des messages 35 émis sur le réseau avionique 14 de communication au cours d'une période de fonctionnement de plusieurs heures. Ainsi, même si l'identifiant du message 35 n'est pas unique dans l'absolu, il est unique au cours d'une période temporelle suffisamment longue par rapport aux cas de fonctionnement du système de communication 10.

L'en-tête de message 42 inclut aussi un champ de nombre de paquets, noté PA_Nb (du français *PAquet Nombre* ou de l'anglais *PAcket Number*), contenant la valeur du nombre N paquet(s) 44 formant le corps du message 35.

En complément facultatif, l'en-tête de message 42 comporte un champ d'identification de l'émetteur 54, également noté Em_ID (du français *Emetteur IDentifiant* ou de l'anglais *Emitter IDentifier*), contenant un identifiant du dispositif émetteur 18 qui est unique pour l'ensemble des dispositifs électroniques reliés au réseau avionique 14 de communication.

En complément facultatif, l'en-tête de message 42 comporte un champ d'identification du récepteur 56, également noté Rec_ID (du français *Récepteur IDentifiant* ou de l'anglais *Receiver IDentifier*), contenant un identifiant du dispositif récepteur 20 qui est unique pour l'ensemble des dispositifs électroniques reliés au réseau avionique 14 de communication. L'homme du métier comprendra que, dans le cas d'une émission de message en mode multi-diffusé (de l'anglais *multicast*), le champ d'identification du récepteur 56 est rempli par une valeur prédéfinie, par exemple égale à 0 avec tous les bits de ce champ à 0.

Selon ce complément facultatif, l'ajout du champ d'identification de l'émetteur 54 et du champ d'identification du récepteur 56 dans l'en-tête de message 42 permet d'échanger cette information entre le dispositif émetteur 18 et le dispositif récepteur 20, c'est-à-dire entre le serveur et le client, quelles que soient la position de ceux-ci par rapport au réseau avionique 14 de communication, ainsi que les caractéristiques du réseau avionique 14 choisi.

Chaque paquet 44 comporte un ou plusieurs agrégats de données 60, chaque agrégat 60 étant également noté DC (de l'anglais *Data Cluster*), comme représenté sur la figure 3. Sur la figure 3, à chaque agrégat 60 est associé un indice j, de valeur comprise entre 0 et P, où P est un nombre entier supérieur ou égal à 0 représentant le nombre d'agrégat(s) 60 inclus dans le paquet 44. Chaque agrégat 60 contient un champ d'identifiant 62, également noté DC_ID (de l'anglais *Data Cluster IDentifier*), un champ de taille 64, également noté DC_B_S (de l'anglais *Data Cluster Body Size*), et un champ de données utiles 66, également noté DC_V (de l'anglais *Data Cluster Value*) et contenant les données utiles de l'agrégat 60 correspondant.

Dans l'exemple de la figure 3, chaque paquet 44 comprend un en-tête de paquet 70, également noté PA_H (de l'anglais *PAcket Header*), et un corps de paquet 72, également noté PA_B (de l'anglais *PAcket Body*), chaque corps de paquet 72 comportant alors le ou les agrégats de données 60. Chaque corps de paquet 72 comporte en outre un en-tête fonctionnel 74, également noté HF (de l'anglais *Header Functional*). Chaque corps de paquet 72 est de préférence constitué de l'en-tête fonctionnel 74 et de l'ensemble de P agrégat(s) 60. L'homme du métier comprendra que, lorsque l'indice j précité est égal à 0, le corps de paquet 72 comprend seulement l'en-tête fonctionnel 74, et ne comporte pas d'agrégat.

Chaque agrégat 60 est adapté pour inclure un ou plusieurs autres agrégats de données 60, le ou les autres agrégats de données 60 formant alors le champ de données utiles 66 dudit agrégat 60. Autrement dit, un agrégat 60, dit parent, est adapté pour inclure un ou plusieurs autres agrégats de données 60, dits fils, le ou les agrégats fils formant alors le champ de données utiles 66 de l'agrégat parent.

A chaque agrégat 60 est associé un unique domaine fonctionnel avionique. Chaque domaine fonctionnel avionique correspond de préférence à un chapitre ATA ou à un sous-chapitre ATA. Les chapitres ou sous-chapitres ATA concernés sont, par exemple, le chapitre ATA 22 relatif au pilote automatique, le chapitre ATA 22-70 relatif au système de gestion du vol, le chapitre ATA 31 relatif au système d'indication / d'enregistrement, le chapitre ATA 31-53 relatif au système d'alarme le chapitre ATA 23 relatif aux communications, le chapitre ATA 27 relatif aux commandes de vol, le chapitre ATA 28 relatif au système de fuel, le chapitre ATA 34 relatif à la navigation.

Lorsque le domaine fonctionnel avionique est identique pour l'ensemble de P agrégat(s) 60 compris dans le message 35, l'en-tête de message 42 comporte de préférence en outre un champ de domaine fonctionnel, non représenté, contenant un identifiant dudit domaine fonctionnel avionique.

Lorsque le domaine fonctionnel avionique n'est pas identique pour l'ensemble de P agrégat(s) 60 compris dans le message 35, le champ d'identifiant 62 de chaque agrégat contient un champ de domaine fonctionnel, noté Sys_Dom (de l'anglais *System Domain*) et visible sur la figure 3, le champ de domaine fonctionnel Sys_Dom comportant un identifiant du domaine fonctionnel avionique associé audit agrégat 60.

Chaque agrégat 60 est identifié de manière unique pour l'ensemble des dispositifs électroniques 18, 20 reliés au réseau avionique de communication 14. Cette unicité de l'identification de l'agrégat 60 permet notamment de garantir, au dispositif récepteur 20, l'interprétation du contenu de l'agrégat 60.

Le champ d'identifiant 62 de chaque agrégat présente de préférence une structure identique d'un agrégat 60 à l'autre. Le champ d'identifiant 62 est par exemple codé sur une taille fixe, telle qu'un mot de 4 octets. En variante, le champ d'identifiant 62 est codé avec une taille auto-adaptative en utilisant un ou plusieurs bits de poids fort pour indiquer sa propre taille. Par exemple, si le premier bit de poids fort est 0, alors le codage est sur 4 octets ; si le premier bit de poids fort est 1 et le deuxième bit de poids fort est 0, alors le codage est sur 8 octets ; etc. La taille du champ d'identifiant 62 est connue du dispositif récepteur 20, ce qui permet au dispositif récepteur 20 de lire ce champ d'identifiant 62, même si sa valeur est inconnue.

Le champ d'identifiant 62 comporte par exemple un champ GP (de l'anglais *Growth Potential*) avec un bit de poids fort pour tenir compte d'une croissance potentielle de la taille de l'identifiant de l'agrégat 60. Le champ d'identifiant 62 comporte ensuite le champ de domaine fonctionnel Sys_Dom contenant un code permettant d'identifier le domaine fonctionnel au niveau de l'aéronef 16. Cette identification du domaine fonctionnel est typiquement exprimée en termes de chapitres ou sous-chapitres ATA, en utilisant par exemple les 7 bits suivants du premier octet du champ GP.

Le champ d'identifiant 62 comporte un champ Std_Dom (de l'anglais *Standard Domain*) contenant un code permettant de distinguer un identifiant d'agrégat faisant partie du domaine public, c'est-à-dire partagé par tous les industriels, d'un identifiant d'agrégat faisant partie du domaine privé, c'est-à-dire spécifique à un industriel ou à un aéronef 16. La taille et les valeurs de ce code sont spécifiques au domaine fonctionnel concerné.

En complément, le champ d'identifiant 62 comporte un champ DS_ID (de l'anglais *Data Set IDentifier*) avec un identifiant des données contenues dans l'agrégat 60 correspondant.

Le champ de taille 64, également noté DC_B_S, est typiquement sous forme d'octets. Le champ de taille 64 est par exemple codé sur une taille fixe, telle qu'un mot de 4 octets. En variante, le champ de taille 64 est codé avec une taille auto-adaptative en utilisant un ou plusieurs bits de poids fort pour indiquer sa propre taille. A titre d'exemple, si le premier bit de poids fort est 0, alors le codage de la taille est sur un octet et les 7 autres bits permettent de coder une taille de 0 à 127. Si le premier bit de poids fort est 1 et le deuxième bit de poids fort est 0, alors le codage est sur deux octets, et les 14 autres bits permettent de coder une taille de 0 à 16 383. Si les deux premiers bits de poids fort sont 1 et le troisième bit de poids fort est 0, alors le codage est sur trois octets, et les 21 autres bits permettent de coder une taille de 0 à 2 097 151 ; et ainsi de suite de façon récurrente jusqu'au nombre d'octets nécessaires.

L'homme du métier observera que, lorsque la plupart des agrégats 60 présente une taille inférieure à 127 octets, ceci afin de limiter l'occupation du réseau avionique 14, il est préférable d'utiliser le codage avec une taille auto-adaptative pour coder le champ de taille 64.

Le champ de taille 64 permet alors au dispositif récepteur 20 d'ignorer un agrégat 60 inconnu ou inutile, et de poursuivre son traitement du message 35 en sautant à l'agrégat 60 suivant, sans rupture de compatibilité entre le dispositif émetteur 18 et le dispositif récepteur 20.

Le champ de taille 64 permet également de faire évoluer la définition de l'agrégat 60 au niveau du dispositif émetteur 18 en ajoutant des paramètres en fin d'agrégat, tout en permettant à un dispositif récepteur 20 n'ayant pas connaissance de ces nouveaux paramètres de les ignorer et de poursuivre son traitement du message 35 en sautant à l'agrégat 60 suivant, ceci donc sans rupture de compatibilité entre le dispositif émetteur 18 et le dispositif récepteur 20.

Le champ de taille 64 permet encore de faire évoluer la définition de l'agrégat 60 au niveau du dispositif récepteur 20 en anticipant l'ajout de paramètres en fin d'agrégat, tout en permettant à un dispositif émetteur 18 n'ayant pas connaissance de ces nouveaux paramètres d'émettre la version précédente de l'agrégat 60. Dans ce cas, le dispositif récepteur 20 ne traitera que les paramètres présents et appliquera une sanction aux paramètres absents, sans rupture de compatibilité entre le dispositif émetteur 18 et le dispositif récepteur 20. La sanction est par exemple choisie au cas par cas, telle qu'une invalidation desdits paramètres, ou bien l'application d'une valeur par défaut, ou encore l'invalidation complète de l'agrégat 60 concerné.

L'en-tête de paquet 70 comporte un champ de type, noté PA Typ (du français *PAquet Type* ou de l'anglais *PAcket Type*), chaque paquet 44 présentant de préférence un type choisi parmi le groupe consistant en : paquet de requête, paquet de réponse et paquet de publication.

L'en-tête de paquet 70 comporte un champ de taille de l'en-tête, noté PA_H_S (de l'anglais *PAcket Header Size*), contenant la taille de l'en-tête de paquet 70, exprimée par exemple en bits ou en octets. Ce champ de taille PA_H_S permet de gérer une évolutivité et une variabilité du contenu de l'en-tête 70.

L'en-tête de paquet 70 comporte un champ de taille du corps, noté PA_B_S (de l'anglais *PAcket Body Size*), contenant la taille du corps de paquet 72, également noté PA_B, cette taille étant exprimée par exemple en octets.

L'en-tête de paquet 70 inclut aussi un champ d'identification du paquet, noté PA_ID (de l'anglais *PAcket IDentifier*), contenant un identifiant du paquet 44 qui est unique pour le message 42 correspondant.

Le couple formé du champ d'identification du message B_ID et du champ d'identification du paquet PA_ID permet alors d'identifier de manière unique le paquet 44 parmi l'ensemble des paquets 44 émis sur le réseau avionique 14 de communication au cours d'une période temporelle qui est suffisamment longue par rapport au fonctionnement du système de communication 10. En effet, de par le champ d'identification du message B_ID et le champ d'identification du paquet PA_ID, même si l'identification n'est pas unique dans l'absolu, elle l'est au cours d'une période temporelle bien plus longue qu'une durée maximale possible entre l'émission d'une requête et la réception de la ou les réponses associées, l'identification étant unique typiquement au cours d'une période temporelle de plusieurs minutes.

En complément facultatif, l'en-tête de paquet 70 inclut un champ de complément, noté PA_H_Compl (de l'anglais *PAcket Header Complement*), comportant certains champs additionnels, dont la nature varie selon le type de paquet. Pour les paquets 44 de type publication, le champ additionnel est par exemple un champ de version permettant d'indiquer une condition minimale de mise à disposition de données requises. Pour les paquets 44 de type requête, le champ additionnel est par exemple un identifiant de session. Pour les paquets 44 de type réponse, les champs additionnels sont par exemple un champ d'identification de la requête permettant de faire la corrélation avec la requête et le champ de version.

L'en-tête fonctionnel 74 définit une grammaire de communication entre le dispositif émetteur 18 et le dispositif récepteur 20. L'en-tête fonctionnel 74, également noté HF, comporte un champ d'identification de type d'action 76, également noté Action_ID (du français *Action IDentifiant* ou de l'anglais *Action IDentifier*), contenant un identifiant d'un type d'action demandée par le dispositif émetteur 18 ou par le dispositif récepteur 20. Le type d'action est par exemple une requête de consultation, une requête de modification, une requête de calcul, une requête de création, une requête d'activation, ou encore une publication. L'homme du métier comprendra alors que, lorsque le type d'action est une requête, celle-ci correspond par exemple à une commande avionique, cette requête étant alors contenue dans un message émis à destination du dispositif qui, parmi le dispositif émetteur 18 et le dispositif récepteur 20, est un dispositif avionique, afin que ce dernier effectue la commande avionique associée à la requête. Lorsque le message généré est émis à destination d'un dispositif qui, parmi le dispositif émetteur 18 et le dispositif récepteur 20, n'est pas un dispositif avionique, l'action associée, contenue dans le champ d'identification de type d'action Action_ID, est typiquement une publication (de l'anglais *publish*).

L'en-tête fonctionnel 74 comporte en outre un champ d'élément 78, également noté Element, contenant l'élément sur lequel porte l'action demandée par le dispositif émetteur 18 ou par le dispositif récepteur 20.

Le champ d'élément 78 présente une structure identique à celle de l'agrégat 60, décrite précédemment, et contient alors un champ d'identifiant 80, également noté Element-ID (de l'anglais *Element IDentifier*), un champ de taille 82, également noté Element_B_S (de l'anglais *Element Body Size*), et un champ de données utiles 84, également noté Element_V (de l'anglais *Element Value*) et contenant les données utiles de l'élément.

La structure et le codage du champ d'identifiant 80, noté Element_ID, sont alors identiques à ceux décrits précédemment pour le champ d'identifiant 62, noté DC_ID. De manière analogue, la structure et le codage du champ de taille 82, noté Element_B_S, sont alors identiques à ceux décrits précédemment pour le champ de taille 64, noté DC_B_S.

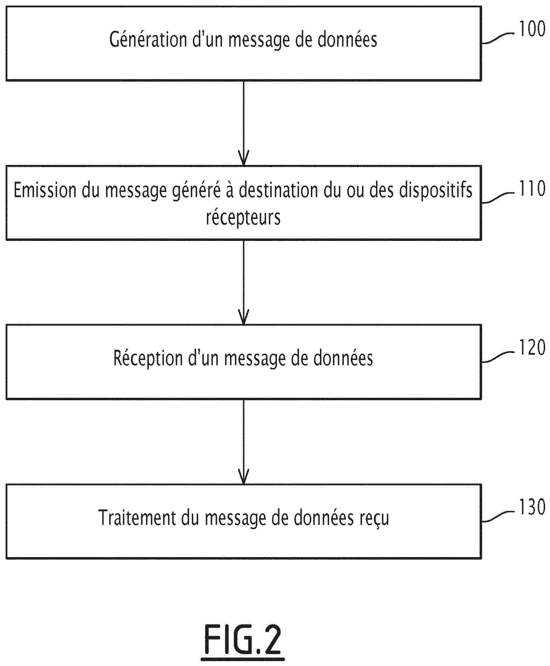

Le fonctionnement du système de communication 10 selon l'invention va désormais être expliqué à l'aide de la figure 2 représentant un organigramme d'un procédé de transmission de données au sein du système de communication 10 depuis un dispositif émetteur 18 à destination de dispositif(s) récepteur 20 via le réseau avionique de communication 14.

Lors d'une étape initiale 100, le dispositif émetteur 18 génère, via son module de génération 40, un ou plusieurs messages de données 35, chaque message 35 comprenant un en-tête de message 42 et un ou plusieurs paquets de données 44.

Selon l'invention, chaque paquet 44 comporte un ou plusieurs agrégats de données 60, chaque agrégat parent 60 étant adapté pour inclure un ou plusieurs autres agrégats fils 60, le ou les autres agrégats fils 60 formant alors le champ de données utiles 66 de l'agrégat parent 60.

Le dispositif émetteur 18 émet ensuite, lors de l'étape suivante 110 et via son module d'émission 46, le ou les messages de données 35 générés sur le réseau avionique de communication 14 à destination du ou des dispositifs récepteurs 20.

Lors de l'étape 120, chaque dispositif récepteur 20 destinataire reçoit, via le réseau avionique de communication 14 et son module de réception 50, le ou les messages de données 35 émis à son attention.

Chaque dispositif récepteur 20 ayant reçu au moins un message 35 traite alors, lors de l'étape suivante 130 et via son module de traitement 52, le ou les messages reçus 35, ceci en ayant connaissance de la structuration de chaque message 35, telle que décrite dans l'exemple de la figure 3, et notamment de la possibilité pour un agrégat parent 60 d'inclure un ou plusieurs autres agrégats fils 60.

En complément, pour la transmission de données entre le dispositif émetteur 18 et le ou les dispositifs récepteurs 20, différents motifs de transmission sont envisagés.

Un motif de publication en mode multi-diffusé est prévu pour une émission de données génériques, d'un dispositif émetteur 18 vers tous les dispositifs récepteurs 20 reliés au réseau avionique de communication 14. Cette émission en mode multi-diffusé est effectuée sur événement, de manière périodique, ou encore sur requête. Par exemple, dans le cas d'une interface entre un système de gestion du vol et une visualisation, l'émission en mode multi-diffusé doit être déclenchée sur un événement du dispositif émetteur 18 pour maintenir un affichage à jour, et est optionnellement complétée par une émission périodique pour surveiller une éventuelle perte de transmission.

Un motif uni-diffusé (de l'anglais *unicast*) est prévu pour une notification d'un dispositif émetteur 18 vers un dispositif récepteur 20, ce motif étant également appelé motif de notification. Ceci permet à un dispositif émetteur 18 d'envoyer des informations de manière unitaire, c'est-à-dire non récurrente, vers un dispositif récepteur 20 particulier. Le motif de notification permet de limiter l'utilisation du réseau avionique de communication 14 au strict nécessaire.

Un motif uni-diffusé est prévu pour une requête d'un dispositif récepteur 20 vers un dispositif émetteur 18, ce motif étant également appelé motif de requête. Dans ce cas, la requête sera suivie d'un acquittement du dispositif émetteur 18 pour informer le dispositif récepteur 20 de la prise en compte de sa requête.

Un motif uni-diffusé bidirectionnel d'abonnement/réponse est une combinaison d'un motif de requête, à savoir une requête d'abonnement, suivi de son acquittement qui va déclencher automatiquement, chez le dispositif émetteur 18, un motif de notification des agrégats 60 auxquels le dispositif récepteur 20 s'est abonné. L'émission de l'abonnement est effectuée sur événement, de manière périodique ou encore sur requête. Par exemple, dans le cas d'une interface entre un système de gestion du vol et une visualisation, l'émission de l'abonnement est effectuée sur un événement du dispositif émetteur 18, suite à la réception de la requête d'abonnement puis sur changement d'un contexte du dispositif émetteur 18, ceci pour maintenir une bonne réactivité. Dans cet exemple, l'émission de l'abonnement est optionnellement complétée par une émission périodique pour surveiller une éventuelle perte de transmission.

Ainsi, le dispositif émetteur 18 selon l'invention permet de générer un message de données 35 avec un agrégat 60 offrant une structure hiérarchisée, au sens où un agrégat parent 60 est adapté pour inclure un ou plusieurs autres agrégats fils 60, le ou les autres agrégats fils 60 formant alors le champ de données utiles 66 de l'agrégat parent 60. Les agrégats 60 ne sont alors pas uniquement des regroupements de paramètres, mais sont également adaptés pour regrouper d'autres agrégats 60. A titre d'exemple, dans le cas d'un système de gestion du vol, les contraintes associées à un leg seront regroupées au sein d'un agrégat 60 associé à un point du plan de vol qui sera lui-même l'un des agrégats 60 associés à une portion du plan de vol, qui sera lui-même l'un des agrégats 60 associés au plan de vol complet.

Cette structuration hiérarchisée permet alors d'offrir une évolutivité et une flexibilité, sans générer d'incompatibilité avec le dispositif récepteur 20. Par exemple, le dispositif émetteur 18 peut introduire dans ses messages émis 35 une structure hiérarchisée nécessaire à destination d'un de ses dispositifs récepteurs 20, pendant que d'autres dispositifs récepteurs 20 ne connaissant pas cette structure pourront la sauter d'un bloc, lors du traitement du message reçu.

En outre, dans le cas d'une transmission au sein d'un aéronef 16 donné, il est facile d'adapter par configuration les émissions au juste besoin en ne mettant dans des structures de messages 35 prédéfinies que les agrégats 60 nécessaires. A titre d'exemple, si un système de gestion du vol embarque une capacité de recherche et sauvetage (de l'anglais *Search and Rescue*), mais que celle-ci n'est pas utilisée sur un aéronef 16 donné, il est, avec la structuration du message 35 selon l'invention, beaucoup plus facile de ne pas émettre les données relatives à cette capacité, incluant tous ses fils, et de réduire ainsi l'occupation du réseau avionique de communication 14.

En outre, pour assurer une meilleure cohérence fonctionnelle entre agrégats 60, à un agrégat 60 est associé un indicateur de référence qui se trouve déjà dans d'autres agrégats 60. Par exemple, dans le cas d'un système de gestion du vol, un identifiant de point du plan de vol est inclus dans plusieurs agrégats 60 distincts.

De plus, la structuration du message 35 selon l'invention, comme représentée sur la figure 3, permet d'offrir une interface de communication efficace entre le dispositif émetteur 18 et le dispositif récepteur 20. Elle permet en particulier, de par la structure d'agrégat 60 et via le module de génération 40, d'effectuer un regroupement de données fonctionnelles en agrégats 60 selon plusieurs critères.

Un premier critère est, par exemple, une cohérence fonctionnelle de l'agrégat 60. Selon ce premier critère, les données d'un même agrégat 60 concernent alors une même fonction ou sous-fonction du dispositif émetteur 18, et leurs valeurs correspondent au même contexte du dispositif émetteur 18. Par exemple, pour un système de gestion du vol, des données relatives à la procédure de départ d'un plan de vol seront regroupées ainsi que celle relatives à la procédure d'arrivée.

Un deuxième critère est, par exemple, une isolation de l'évolutivité dans les agrégats 60. Les paramètres d'un même genre, sujets à évolution, sont regroupés afin de permettre un incrément cohérent. Par exemple, pour un système de gestion du vol, des données de prédiction seront regroupées pour permettre des évolutions futures, sans se retrouver avec un patchwork de paramètres. De même, une structure de taille variable sera isolée afin de permettre son évolution, sans impacter le traitement des autres paramètres.

Un troisième critère est, par exemple, une isolation de données optionnelles au sein d'un agrégat 60 donné, afin de pouvoir gérer efficacement leur présence ou leur absence. Par exemple, pour un système de gestion du vol, les contraintes d'altitude et/ou de vitesse susceptibles d'être associées à un point du plan de vol constitueront un agrégat 60 qui sera présent seulement si ce type de contrainte(s) est défini sur le point en question.

Un quatrième critère est, par exemple, une spécialisation des agrégats 60 selon les besoins. Par exemple, pour les affichages de premier niveau correspondant à un motif de publication en mode multi-diffusé, l'agrégat 60 contiendra seulement les paramètres principaux, ceci essentiellement afin de limiter la consommation des ressources du réseau avionique 14 de communication. En revanche, pour un affichage détaillé correspondant à un motif d'abonnement, l'agrégat 60 du même élément fonctionnel inclura les paramètres détaillés, même s'ils ne sont pas tous requis par un dispositif récepteur 20 donné, ceci pour faciliter la polyvalence. En effet, le mécanisme d'abonnement permet à un dispositif récepteur 20 de choisir un ensemble particulier d'agrégats 60, la consommation des ressources du réseau avionique 14 de communication étant alors moins importante.

On conçoit ainsi que le procédé d'émission et le dispositif électronique émetteur 18 selon l'invention permettent de s'adapter plus facilement aux différents types de données à échanger à bord de l'aéronef 16.

## Revendications

1. Procédé d'émission d'un message de données (35) à destination d'au moins un dispositif électronique récepteur (20), le procédé étant mis en oeuvre par un dispositif électronique émetteur (18), le dispositif émetteur (18) et le ou les dispositifs récepteurs (20) étant reliés via un réseau avionique (14) embarqué à bord d'un aéronef (16), au moins un dispositif parmi le dispositif émetteur (18) et le dispositif récepteur (20) étant un dispositif avionique embarqué à bord de l'aéronef (16),
le procédé comprenant :
- la génération (100) d'un message de données (35), le message (35) comprenant un en-tête de message (42) et un ou plusieurs paquets de données (44), et
- l'émission (110) du message généré à destination du ou des dispositifs récepteurs (20),
**caractérisé en ce que** chaque paquet (44) comporte un ou plusieurs agrégats de données (60), chaque agrégat (60) contenant un champ d'identifiant (62), un champ de taille (64) et un champ de données utiles (66), et chaque agrégat (60) est adapté pour inclure un ou plusieurs autres agrégats de données (60), le ou les autres agrégats de données (60) formant alors le champ de données utiles (66) dudit agrégat (60), et
**en ce qu'**à chaque agrégat (60) est associé un unique domaine fonctionnel avionique,
chaque domaine fonctionnel avionique correspondant de préférence à un chapitre ATA ou à un sous-chapitre ATA.

2. Procédé selon la revendication 1, dans lequel, lorsque le domaine fonctionnel avionique est identique pour l'ensemble d'agrégat(s) (60) compris dans le message (35), l'en-tête de message (42) comporte un champ de domaine fonctionnel contenant un identifiant du domaine fonctionnel avionique.

3. Procédé selon la revendication 1, dans lequel, lorsque le domaine fonctionnel avionique n'est pas identique pour l'ensemble d'agrégat(s) (60) compris dans le message (35), le champ d'identifiant (62) de chaque agrégat (60) contient un identifiant du domaine fonctionnel avionique associé audit agrégat (60).

4. Procédé selon l'une quelconque des revendications précédentes, dans lequel chaque agrégat (60) est identifié de manière unique pour l'ensemble des dispositifs électroniques (18, 20) reliés au réseau avionique (14),
le champ d'identifiant (62) de chaque agrégat (60) présentant de préférence une structure identique d'un agrégat (60) à l'autre.

5. Procédé selon l'une quelconque des revendications précédentes, dans lequel l'en-tête de message (42) comporte un champ d'identification de l'émetteur (54) contenant un identifiant du dispositif émetteur (18) qui est unique pour l'ensemble des dispositifs électroniques (18, 20) reliés au réseau avionique (14).

6. Procédé selon l'une quelconque des revendications précédentes, dans lequel l'en-tête de message (42) comporte un champ d'identification du récepteur (56) contenant un identifiant du dispositif récepteur (20) qui est unique pour l'ensemble des dispositifs électroniques (18, 20) reliés au réseau avionique (14).

7. Procédé selon l'une quelconque des revendications précédentes, dans lequel chaque paquet (44) comprend un en-tête de paquet (70) et un corps de paquet (72), chaque corps de paquet (72) comportant alors le ou les agrégats de données (60), chaque paquet (44) présentant un type choisi parmi le groupe consistant en : paquet de requête, paquet de réponse et paquet de publication.

8. Programme d'ordinateur comportant des instructions logicielles qui, lorsqu'elles sont exécutées par un ordinateur, associé à un dispositif électronique émetteur, permettent audit dispositif électronique de réaliser les étapes d'un procédé selon l'une quelconque des revendications précédentes.

9. Dispositif électronique émetteur (18) configuré pour émettre un message de données à destination d'au moins un dispositif électronique récepteur (20), le dispositif émetteur (18) et le ou les dispositifs récepteurs (20) étant aptes à être reliés via un réseau avionique (14) embarqué à bord d'un aéronef (16), au moins un dispositif parmi le dispositif émetteur (18) et le dispositif récepteur (20) étant un dispositif avionique destiné à être embarqué à bord de l'aéronef (16),
le dispositif électronique émetteur (18) comprenant :
- un module de génération (40) configuré pour générer un message de données (35), le message (35) comprenant un en-tête de message (42) et un ou plusieurs paquets de données (44), et
- un module d'émission (46) configuré pour émettre le message généré (35) à destination du ou des dispositifs récepteurs (20),
**caractérisé en ce que** chaque paquet (44) comporte un ou plusieurs agrégats de données (60), chaque agrégat (60) contenant un champ d'identifiant (62), un champ de taille (64) et un champ de données utiles (66), et chaque agrégat (60) est adapté pour inclure un ou plusieurs autres agrégats de données (60), le ou les autres agrégats de données (60) formant alors le champ de données utiles (66) dudit agrégat (60), et
**en ce qu'**à chaque agrégat (60) est associé un unique domaine fonctionnel avionique,
chaque domaine fonctionnel avionique correspondant de préférence à un chapitre ATA ou à un sous-chapitre ATA.

## Patentansprüche

1. Verfahren zum Senden einer Datennachricht (35) zu zumindest einer elektronischen Empfangsvorrichtung (20), wobei das Verfahren mittels einer elektronischen Sendevorrichtung (18) durchgeführt wird, wobei die Sendevorrichtung (18) und die Empfangsvorrichtung (20) oder die Empfangsvorrichtungen (20) via ein Avioniknetzwerk (14) verbunden sind, welches an Bord eines Luftfahrzeugs (16) gebracht ist, wobei mindestens eine Vorrichtung von der Sendevorrichtung (18) und der Empfangsvorrichtung (20) eine Avionikvorrichtung ist, welche an Bord des Luftfahrzeugs (16) gebracht ist,
wobei das Verfahren aufweist:
- das Erzeugen (100) einer Datennachricht (35), wobei die Nachricht (35) einen Nachrichtenkopf (42) und ein oder mehrere Datenpakete (44) aufweist, und
- das Senden (110) der erzeugten Nachricht zu der oder den Empfangsvorrichtungen (20),
**dadurch gekennzeichnet, dass** jedes Paket (44) ein oder mehrere Datencluster (60) aufweist, wobei jedes Cluster (60) ein Identifikator-Feld (62), ein Größe-Feld (64) und ein Nutzdaten-Feld (66) aufweist, und wobei jedes Cluster (60) angepasst ist, um ein anderes oder mehrere andere Datencluster (60) aufzuweisen, wobei das andere oder die anderen Datencluster (60) dann das Nutzdaten-Feld (66) des besagten Clusters (60) bilden, und
dadurch, dass mit jedem Cluster (60) eine einzige Avionikfunktionaldomäne assoziiert ist,
wobei jede Avionikfunktionaldomäne vorzugsweise zu einem ATA-Kapitel oder zu einem ATA-Subkapitel korrespondiert.

2. Verfahren gemäß Anspruch 1, wobei, wenn die Avionikfunktionaldomäne für die Gruppe an Cluster(n) (60), welches/welche in der Nachricht (35) enthalten ist/sind, identisch ist, der Nachrichtenkopf (42) ein Funktionaldomäne-Feld aufweist, welches einen Identifikator der Avionikfunktionaldomäne enthält.

3. Verfahren gemäß Anspruch 1, wobei, wenn die Avionikfunktionaldomäne für die Gruppe an Cluster(n) (60), welches/welche in der Nachricht (35) enthalten ist/sind, nicht identisch ist, das Identifikator-Feld (62) jedes Clusters (60) einen Identifikator der Funktionaldomäne, welche mit dem besagten Cluster (60) assoziiert ist, aufweist.

4. Verfahren gemäß irgendeinem der vorherigen Ansprüche, wobei jedes Cluster (60) auf eindeutige Weise für die Gruppe an elektronischen Vorrichtungen (18, 20), welche mit dem Avioniknetzwerk (14) verbunden sind, identifiziert wird,
wobei das Identifikator-Feld (62) jedes Clusters (60) vorzugsweise eine Struktur hat, welche von einem Cluster (60) zum anderen identisch ist.

5. Verfahren gemäß irgendeinem der vorherigen Ansprüche, wobei der Nachrichtenkopf (42) ein Feld zur Identifikation des Senders (54) aufweist, welches einen Identifikator der Sendevorrichtung (18) enthält, welcher für die Gruppe an elektronischen Vorrichtungen (18, 20), welche mit dem Avioniknetzwerk (14) verbunden sind, eindeutig ist.

6. Verfahren gemäß irgendeinem der vorherigen Ansprüche, wobei der Nachrichtenkopf (42) ein Feld zur Identifikation des Empfängers (56) aufweist, welches einen Identifikator der Empfangsvorrichtung (20) enthält, welcher für die Gruppe an elektronischen Vorrichtungen (18, 20), welche mit dem Avioniknetzwerk (14) verbunden sind, eindeutig ist.

7. Verfahren gemäß irgendeinem der vorherigen Ansprüche, wobei jedes Paket (44) einen Paketkopf (70) und einen Paketkörper (72) aufweist, wobei jeder Paketkörper (72) dann das oder die Datencluster (60) aufweist, und wobei jedes Paket (44) einen Typ hat, welcher ausgewählt ist aus der Gruppe, welche besteht aus: Anforderungspaket, Antwortpaket und Publikationspaket.

8. Computerprogramm, welches Logikanweisungen aufweist, welche, wenn sie mittels eines Computers ausgeführt werden, welcher mit einer elektronischen Sendevorrichtung assoziiert ist, es der besagten elektronischen Vorrichtung erlauben, die Schritte eines Verfahrens gemäß irgendeinem der vorherigen Ansprüche zu realisieren.

9. Elektronische Sendevorrichtung (18), welche eingerichtet ist, um eine Datennachricht zu zumindest einer elektronischen Empfangsvorrichtung (20) zu senden, wobei die Sendevorrichtung (18) und die Empfangsvorrichtung (20) oder die Empfangsvorrichtungen (20) imstande sind, via ein Avioniknetzwerk (14) verbunden zu sein, welches an Bord eines Luftfahrzeugs (16) gebracht ist, wobei mindestens eine Vorrichtung von der Sendevorrichtung (18) und der Empfangsvorrichtung (20) eine Avionikvorrichtung ist, welche dazu bestimmt ist, an Bord des Luftfahrzeugs (16) gebracht zu sein,
wobei die elektronische Sendevorrichtung (18) aufweist:
- ein Modul zum Erzeugen (40), welches eingerichtet ist, um eine Datennachricht (35) zu erzeugen, wobei die Nachricht (35) einen Nachrichtenkopf (42) und ein oder mehrere Datenpakete (44) aufweist, und
- ein Modul zum Senden (46), welches eingerichtet ist, um die erzeugte Nachricht (35) zu der oder den Empfangsvorrichtungen (20) zu senden,
**dadurch gekennzeichnet, dass** jedes Paket (44) ein oder mehrere Datencluster (60) aufweist, wobei jedes Cluster (60) ein Identifikator-Feld (62), ein Größe-Feld (64) und ein Nutzdaten-Feld (66) aufweist, und wobei jedes Cluster (60) angepasst ist, um ein anderes oder mehrere andere Datencluster (60) aufzuweisen, wobei das andere oder die anderen Datencluster (60) dann das Nutzdaten-Feld (66) des besagten Clusters (60) bilden, und
dadurch, dass mit jedem Cluster (60) eine einzige Avionikfunktionaldomäne assoziiert ist,
wobei jede Avionikfunktionaldomäne vorzugsweise zu einem ATA-Kapitel oder zu einem ATA-Subkapitel korrespondiert.

## Claims

1. A transmission method for transmitting a data message (35) to at least one electronic receiving device (20), the method being implemented by an electronic transmitting device (18), the transmitting device (18) and the one or more receiving device(s) (20) being linked via an avionics network (14) on board an aircraft (16), at least one device from the transmitting device (18) and the receiving device (20) being an avionics device on board the aircraft (16),
the method comprising:
- the generation (100) of a data message (35), the message (35) comprising a message header (42) and one or more data packet(s) (44); and
- the transmission (110) of the generated message to the one or more receiving device(s) (20);
**characterized in that** each packet (44) comprises one or more data cluster(s) (60), each cluster (60) containing an identifier field (62), a size field (64) and a payload data field (66), and each cluster (60) is adapted to include one or more other data cluster(s) (60), the one or more other data cluster(s) (60) then forming the payload data field (66) of said cluster (60), and
**in that** to each cluster (60) is associated a single avionics functional domain,
each avionics functional domain preferably corresponding to an ATA chapter or an ATA sub-chapter.

2. The method according to claim 1, wherein, when the avionics functional domain is identical for the set of the cluster(s) (60) included in the message (35), the message header (42) comprises a functional domain field containing an identifier of the avionics functional domain.

3. The method according to claim 1, wherein, when the avionics functional domain is not identical for the set of the cluster(s) (60) included in the message (35), the identifier field (62) of each cluster (60) contains an identifier of the avionics functional domain associated to said cluster (60).

4. The method according to any one of the preceding claims, wherein each cluster (60) is identified in a unique manner for all of the electronic devices (18, 20) linked to the avionics network (14),
the identifier field (62) of each cluster (60) preferably having an identical structure from one cluster (60) to another.

5. The method according to any one of the preceding claims, wherein the message header (42) includes a transmitter identification field (54) containing an identifier of the transmitting device (18) which is unique for all the electronic devices (18, 20) linked to the avionics network (14).

6. The method according to any one of the preceding claims, wherein the message header (42) includes a receiver identification field (56) containing an identifier of the receiving device (20) which is unique for all of the electronic devices (18, 20) linked to the avionics network (14).

7. The method according to any one of the preceding claims, wherein each packet (44) includes a packet header (70) and a packet body (72), with each packet body (72) then comprising the one or more data cluster(s) (60), each packet (44) presenting a type chosen from among the group consisting of: request packet, response packet, and publish packet.

8. A computer program that comprises the software instructions which, when executed by a computer, associated with an electronic transmitting device, allow said electronic device to carry out the steps of a method according to any one of the preceding claims.

9. An electronic transmitting device (18) configured to transmit a data message to at least one electronic receiving device (20), the transmitting device (18) and the one or more receiving device(s) (20) being able to be linked via an avionics network (14) on board an aircraft (16), at least one device from the transmitting device (18) and the receiving device (20) being an avionics device intended to be on board the aircraft (16);
the electronic transmitting device (18) comprising:
- a generation module (40) configured to generate a data message (35), the message (35) comprising a message header (42) and one or more data packet(s) (44); and
- a transmission module (46) configured to transmit the generated message (35) to the one or more receiving device(s) (20),
**characterized in that** each packet (44) comprises one or more data cluster(s) (60), each cluster (60) containing an identifier field (62), a size field (64) and a payload data field (66), and each cluster (60) is adapted to include one or more other data cluster(s) (60), the one or more other data cluster(s) (60) then forming the payload data field (66) of said cluster (60), and
**in that** to each cluster (60) is associated a single avionics functional domain,
each avionics functional domain preferably corresponding to an ATA chapter or an ATA sub-chapter.
